# EUROPEAN PATENT APPLICATION

(11) **EP 4 230 370 A1**
(43) Date of publication of application: **23.08.2023**
(21) Application number: 21879694.4
(22) Date of filing: 25.06.2021
(51) Int. Cl.: B27D 1/04, B27K 3/02, B27M 1/00, B32B 21/14

(54) **FIREPROOFING CHEMICAL-CONTAINING WOOD MATERIAL AND PRODUCTION METHOD THEREFOR**

(30) Priority: 16.10.2020 JP 2020174498
(71) Applicant: Uni-Wood Corporation Co., Ltd., Hyogo 663-8162 (JP)
(72) Inventor: YOKOO Kuniharu, Nishinomiya-shi Hyogo 663-8162 (JP)
(74) Representative: Marks & Clerk LLP
(86) International application number: PCT/JP2021/024204
(87) International publication number: WO 2022/079950

(57) **Abstract**

The present invention improves the reliability of fire-resistance performance, and suppresses a drop in strength and a drop in Young's modulus for bending, with regard to a structural LVL containing a fireproofing chemical for fire-resistant structural wood material-use. The present invention is the LVL 61 for structural use comprising a plurality of raw material veneers 51 layered in the front-back thickness direction via adhesive layers therebetween. Each of the raw material veneers 51 is a wood material having a fireproofing chemical injected to the interior thereof and is constituted from a site of sapwood part alone, a site of heartwood part alone, or, a site wherein a sapwood part and a heartwood part are mixed. Injection holes 62 are provided, each having a circular cross section and extending in the thickness direction from each of the front surface and the back surface of the LVL 61. The injection holes 62 traverse through the plurality of raw material veneers 51 and the adhesive layers. On the front surface and the back surface, respectively, plurality of the injection holes 62 are aligned while leaving an interval therebetween in the width direction and in the length direction of the LVL 61. The injection holes 61(U) from the front surface and the injection holes 61(D) from the back surface are disposed at different positions from one another in the width direction and in the length direction.

## Description

### TECHNICAL FIELD

The present invention relates to wood containing a fireproofing chemical for wood materials for fire-resistant structure, and a method for producing the same.

### BACKGROUND ART

### (Current status of semi-fireproofing or flame-retardant wood)

Many of the chemical-injected woods in circulation today are manufactured by impregnating wood materials with chemical agents for subjecting to treatments of preservative, mothproof, flame-retardant, and semi-fireproofing. For example, in adopting a method of injecting chemical agents into lumber or a lamina for a laminated lumber, it has been carried out to slightly increase the number of chemical agents injected area by subjecting to incising processing. However, in lumber or a laminated lumber, the degree of penetration of the chemical agents is markedly different between the heartwood section and the sapwood section. As a result, there was a large fluctuation in the performance of the chemical-injected woods and the performance of the wood products, and it could be seen that some of them did not meet the standard values for chemical-treated wood. When wood materials containing fireproofing chemicals of wood materials for fire-resistant structure existing an area to which injection of chemical agents is insufficient are heated, combustible gases are generated from the wood tissue at the insufficient area by reaching to a high temperature region of around 200°C or higher, and these gases ignite, whereby its fire-resistance performance is greatly impaired.

### (Changes in the market for lumber in Japan today)

When the market of lumber in Japan today is surviewed, the following changes can be observed.

The market for single-family wooden houses, which is the largest market for lumber, is shrinking due to the decreasing birthrate and aging population.

On the other hand, in medium to large scale buildings where an unspecified number of people gather such as public facilities, stores, offices, lodging facilities, etc., it is required that the spaces that can create a "comfortable" and "fashionable image" as well as maintain a healthy 50% to 60% humidity level that is resistant to microorganisms such as viruses, etc., and the market for interior and exterior wood products is expanding. In such medium to large scale buildings where an unspecified number of people gather, safety in case of fire is an important factor, so that the demand for wood that satisfies stable performance of wood materials for fire-resistant structure such as flame-retardant and semi-incombustible, etc., is increasing.

### (Problems of conventional products and technologies and their effects)

Next, when the problems in technology of the conventional products that have been offered until today and their effects are summarized, it can be understood that they are in the following situation.
·In the fire-resistant wood materials such as flame-retardant and semi-fireproofing woods, etc., in the conventional products, there exist a part where the injection amount of the fireproofing chemical is insufficient. As a result, there are some products with insufficient in performance, and reliability to the performance of fire-resistant wood materials is impaired.
·In order to set the minimum value of the injection amount as the standard value, excessive injection of noncombustible chemical agent is carried out, resulting in increased in the cost and the efflorescence phenomenon on the surface of the product.

### (Technical Basic knowledge)

The technical basic knowledge of the invention is as follows:
·Knowledge of the fact that liquid water or aqueous solution hardly moves through wood except in sapwood section.
·Knowledge of the fact that the movement of liquid water or aqueous solution in wood is mainly in the direction of the fibers and the movement in the direction perpendicular to the fibers is very slow.
·There are three kinds of chemical agent injection treatments depending on the purpose of the chemical treatment, these three kinds, which is the mothproof treatment (chemical agent injection into the sapwood section, which is rich in nutrients for insects such as starch), the preservative treatment (chemical treatment only on the periphery of the wood) and the treatment by the fireproofing chemicals for fire-resistant wood materials such as the semi-incombustible and flame-retardant agent (chemical agent injection treatments uniform to the wood) are clearly distinguished, and the treatment suitable for the semi-fireproofing/ flame-retardant chemical treatment (chemical agent injection treatments uniform to the wood) should be carried out.
·The fireproofing chemicals for fire-resistant wood materials such as flame-retardant and semi-fireproofing treatment woods often have factors that inhibit adhesion in many cases, and when the woods are to be adhered after injection, sufficient adhesive strength for the application may not be obtained in many cases.

### (Prior art documents and problems thereof)

As the prior art documents for such fire-resistant modified wood materials, there may be mentioned Patent Documents 1 to 5, neither they show the technology of using only the sapwood section by clearly distinguishing between the heartwood section and the sapwood section, nor they show any proposal focusing on the fact that the mechanism of liquid movement is completely different between the heartwood section and the sapwood section.

Specifically, at the paragraph 0014 of the specification of Patent Document 1, a wide range of time as 6 to 72 hours is set for a time of applying an immersion treatment, and the reason for this, it is mentioned that the thickness and arrangement of the conduits vary depending on the kind of woods, and as a specific example thereof, it is pointed out that the sapwood section has thick conduits and coarse in density. However, Patent Document 1 does not distinguish between softwoods and hardwoods, which is out of the question. In addition, in the Examples shown in below paragraph 0022 of the specification, only a Japanese cedar board or a paulownia board is used as the raw material wood and do not use by distinguishing between the heartwood section and the sapwood section, and in the Japanese cedar as if the conduit exists, the conduit itself does not exist; and the paulownia is a diffuse-porous broadleaved tree in which an aqueous solution can be injected around the conduit of the sapwood section; and there exists a doubt in the recognition itself that when the sapwood section is the Japanese cedar and paulownia, the conduit is thick and the density is low. Thus, it is recognized that Document 1 discloses the technical concept that, assuming that the heartwood section and the sapwood section are not used by distinguishing to each other, or in other words, noncombustible wood boards can be produced by adjusting treatment conditions without using the heartwood section and the sapwood section separately.

Even in Patent Document 2, in the paragraph 0011 of the specification, it is shown that a sufficient fireproofing chemical is impregnated at the conduit and its surrounding area, but in Examples shown below paragraph 0017 of the specification, as a raw material wood, only a paulownia board is used, and the heartwood section and the sapwood section are not used separately. Thus, in Patent Document 2, assuming that the heartwood section and the sapwood section are not used by distinguishing to each other, in other words, it is recognized that Patent Document 2 discloses the technical concept that, without using the heartwood section and the sapwood section separately, noncombustible properties can be markedly improved by the formation of a glass-like film which is presumed to be formed by the crosslinking reaction of the fireproof chemical liquid impregnated in the paulownia wood and tannin latently impregnated in the paulownia wood by heat. Further, the inventor of the present application has never heard the story that specific tannin is present only in the paulownia wood, and even when it undergoes a crosslinking reaction, it is still an organic substance, and it is considered that the difficulty of burning is irrelevant.

In Patent Document 3, it proposes a method of injecting a chemical liquid into a veneer which comprises adhering a chemical liquid only to the portion of a plurality of protrusions for forming recesses, compressing the veneer to the thickness or less by pressing the protrusions against the dried veneer and after contacting the chemical liquid with the veneer, releasing the protrusions from the veneer to penetrate the chemical liquid into the tissue of the veneer. However, it is difficult to consider that the chemical agent can enter into the wood by the method in Patent Document 3, the heartwood section and the sapwood section are not used by distinguishing to each other, and even when the chemical liquid is adhered only to the portion of the protrusions for forming recesses, the movement of the chemical liquid hardly occur in the heartwood section.

In Patent Document 4, it proposes that cavities and grooves which are continuous or intermittent in the lengthwise direction of a rectangular lumber are formed on a laminated portion by a lumber except for a front side portion and a rear side portion of the rectangular lumber, a filler is injected into a part of these cavities or grooves to form a number of wall constituting materials, and after connecting these wall constituting materials by laminating vertically with a connecting means, a filler is injected into the unfilled portions of the cavities or grooves to close the gaps of connection of the respective wall constituting materials to construct an integrated wall. However, even in Patent Document 3, the heartwood section and the sapwood section are not used by distinguishing to each other, and the movement of the chemical liquid hardly occur in the heartwood section. Moreover, in Patent Document 4, although the chemical liquid can be injected into the cavities or grooves formed between the lumbers, the chemical liquid cannot be injected into the interior of each lumber, and the movement of the chemical liquid inside each lumber cannot be expected.

In Patent Document 5, a chemical liquid is dripped into a groove in which each of the four sides of the wood is subjected to back boundary processing by a saw to pour into the inside of the wood. Incidentally, holes are drilled at the right angles to the back boundary from each of the four surfaces of the wood, and the resin flowed inside the wood enters the horizontal holes and forms a rib. Wood and wood processed product whose surface has treated with a chemical liquid at the time when the synthetic resin solution has cured are proposed. However, even in this Patent Document 5, the heartwood section and the sapwood section are not used by distinguishing to each other, and at the heartwood section, movement of the chemical liquid is difficult. And yet, the grooves subjected to back boundary processing by sawing are provided along the direction of extending of the fiber of wood, so that it can be hardly expected the movement of the chemical liquid between the grooves.

### (Utilization of Japanese cedar (sugi) resources in Japan today)

On the other hand, when the Japanese cedar which is a representative resource of conifers in Japan is aimed, there are a large number of resources of Japanese cedar in Japan. At present, the main products of Japanese cedar in Japan are pillars and beams obtained by sawing the central part of Japanese cedar logs into a form called "heart-holding" or "heart-sari". On the other hand, at the portion of the sapwood section, a roof board has conventionally been used for sheathing roof boards, but the demand for these boards has been replaced by plywood, so there is no use for these boards at present.

As mentioned above, the heartwood section of conifers including Japanese cedar is a biological material so that it has a cellular structure that prevents penetration of foreign substances from the outside. The sapwood section, which is the living part of the tree, has a structure suitable for transferring water from the ground to the leaves, and in the wood of the sapwood section, an aqueous chemical solution easily moves in the fiber direction. Specifically, in Japanese cedar, except for the sapwood section, the aqueous chemical solution infiltrates only about 50 mm or less in the fiber direction and infiltrates only about less than 5 mm in the direction perpendicular to the fiber by the usual decompression/pressurization injection.

On the other hand, in the sapwood section of the Japanese cedar, it has confirmed by the preliminary tests carried out by the present inventor that the aqueous chemical solution infiltrates 100 mm or more in the fiber direction and infiltrates 5 mm or more in the direction perpendicular to the fiber direction by the usual decompression/pressurization injection.

### (Prior invention and patent application)

Based on this knowledge, the present inventor completed the invention of fire-resistant wood materials such as semi-incombustible or flame-retardant wood and filed a patent application under Japanese Patent Application No. 2018-226298 on December 3, 2018, and this application was published as Patent Document 6.

An object of the invention according to this Patent Document 6 is to provide a semi-incombustible or flame-retardant wood capable of exhibiting uniform fire-resistance performance and a method for manufacturing the same and is to provide a semi-incombustible or flame-retardant wood using only conifers such as Japanese cedar, or sapwood of diffuse-porous broadleaved tree material as a raw material. At that time, slits are formed in the wood at appropriate intervals and at a predetermined depth, and the woods are laminated with an adhesive with the overlapping surfaces facing inside. It was to provide a semi-incombustible or flame-retardant wood having almost uniform and stable non-combustibility throughout the entire wood by injecting a noncombustible chemical agent such as a water-soluble under reduced pressure and pressure into the laminated lumber processed in this way.

The semi-incombustible or flame-retardant wood of the invention according to this Patent Document 6 is a laminated lumber of Japanese cedar flat grain sapwood having a thickness of 20 mm, and the surface is constituted by a plain flat grain material, so that the appearance is very good and the injection holes having a width of 3 mm and a depth of 5 mm on both sides of the laminated surface do not pose any problem in terms of appearance. And when semi-incombustible combustion tests were carried out on the materials in which an amount necessary for semi-incombustible was injected for a noncombustible chemical agent injection amount at a concentration of 25% and 140 to 150 kg/m3, then the results were each acceptable in terms of calorific value and the presence or absence of cracks to the back surface.

However, in the present invention, only sapwood is used so that there has been a problem that an amount of raw wood that could be collected from a single tree was limited.

In addition, when perforation is performed as a means for uniformly injecting an effective number of chemical agents into LVL, the influence of a decrease in bending Young's modulus due to cross-sectional defects cannot be avoided, and in particular, when it is carried out as a structural material, this influence cannot be ignored, and there was no disclosure or suggestion regarding this point in any prior art documents.

### PRIOR ART DOCUMENTS

### PATENT DOCUMENTS

Patent Document 1: Japanese Patent No. 4221599
Patent Document 2: Japanese Patent Application Laid-Open Publication No. 2007-63749
Patent Document 3: Japanese Patent No. 3344703
Patent Document 4: Japanese Patent Application Laid-Open Publication No. 1998-131635
Patent Document 5: Japanese Patent Application Laid-Open Publication No. 1996-281203
Patent Document 6: Japanese Patent Application Laid-Open Publication No. 2020-89978

### SUMMARY OF THE INVENTION

### PROBLEMS TO BE SOLVED BY THE INVENTION

An object of the present invention is to improve reliability of fire-resistance performance of LVL for structure containing a fireproofing chemical for wood materials for fire-resistant structure, and to suppress the decrease in bending Young's modulus and the decrease in strength.

An object of the present invention is to achieve both an improvement of the reliability of fire-resistance performance of LVL for structure containing a fireproofing chemical for wood materials for fire-resistant structure and easiness in procurement of raw materials.

### MEANS TO SOLVE THE PROBLEMS

The present invention provides wood containing a fireproofing chemical for fire-resistant wood materials as a means of solving the above problem.

The important points of the present invention in comparison with the above prior art documents are as follows.
1. Based on the knowledge that a chemical agent in aqueous solution moves more easily in the fiber direction than in the direction perpendicular to the fiber, although there are differences in the movement thereof depending on the different parts of the wood such as the sapwood section and the heartwood section, the chemical agent in aqueous solution is being injected by utilizing this.
2. In order to equalize the chemical agent injection, injection holes extending in the direction that intersects the fiber direction shall be provided to inject water-soluble chemical agent agents.
3. In the case of LVL for structures in which a plurality of layers of raw material veneers are laminated in the thickness direction of front and back through an adhesive layer, the adhesive layer prevents the chemical agent from infiltrating in the thickness direction. An injection hole extending through the adhesive layer is provided to inject the water-soluble chemical agent.
4, To provide an arrangement structure of injection holes that can ensure infiltration of the chemical agent throughout and ensure the strength of the LVL for structure.

Further, in the invention of Patent Document 6, the invention was based on knowledge of the injection movement of the water-soluble chemical agent in the sapwood section, but the present invention also focuses on the injection movement of the water-soluble chemical agent in the heartwood section and was completed by finding the amount of the chemical agent that can move reliably in the longitudinal direction.

Specifically, the raw material veneer used in the implementation of the invention is composed of a part only in sapwood section, a part only in a heartwood section, or a part in which the sapwood section and the heartwood section are mixed. The lumber provided by the present invention is a LVL for structure in which a plurality of layers of these raw material veneers is laminated in the thickness direction of front and back through an adhesive layer.

Here, when the movement of aqueous solutions such as water-soluble chemical agents in the sapwood section and the heartwood section is explained in more detail, there is a difference between conifers and hardwoods, and is as follows.

First, in conifers, aqueous solutions move between cells in the sapwood section because the membrane pores of the tracheid are open, but in the heartwood section, the membrane pores of the tracheid are closed, thus it becomes difficult for aqueous solutions to move between cells.

On the other hand, in the case of hardwoods, the movement of aqueous solution is readily since fillers such as tylose are absent in the lumen of the conduit in the sapwood section, but in the heartwood section, the conduit is filled with filler substances such as tylose so that this filler substances obstruct the movement of the aqueous solution, making it difficult to move.

Thus, although there are differences between conifers and hardwoods, a difference in the amount of movement of aqueous solution exists between the heartwood section and the sapwood sections, and if this difference is ignored and the heartwood section and the sapwood sections are used together, the injected water-soluble chemical agent cannot be evenly distributed.

In this respect, in the lumber of LVL for structure of the present invention, the difference in the amount of movement could be reduced by arranging and laminating the raw material veneers so that the fiber direction, and the lengthwise direction of the above-mentioned lathe checks are substantially aligned with the longitudinal direction of the LVL.

That is, in the present invention, the difference in the amount of movement of the fireproofing chemical in the longitudinal direction of the LVL in the heartwood section and the sapwood section can be reduced by the following mechanism.

In detail, first, since the state of the cell of wood is greatly different between the sapwood section and the heartwood section as described above, in the sapwood section, the aqueous solution of the chemical agent can move at least about 10 cm, and in some cases about 30 cm, in the fiber direction under injection with reduced pressure and pressure. On the other hand, in the heartwood section, intercellular movement of the aqueous solution of the chemical agent is practically impossible, and the aqueous solution of the chemical agent hardly moves even in the fiber direction.

Second, the state of the lathe checks in rotary veneers is greatly different between the sapwood section and heartwood sections. Rotary veneer is a thin veneer obtained by thinly and continuously slicing from the periphery of the wood by means of a rotary race, in which log-like raw material wood and a blade positioned along the axial direction of its periphery are rotated and moved relative to one another. This rotary veneer has an arc-shaped cross-section at the sliced stage, but becomes a flat plate with a straight cross-section at the laminated stage, resulting in lathe checks according to the radius of curvature. As the radius of curvature decreases, the lathe checks become larger (deeper) and generate more numerous. As a result, the rotary veneer obtained from the heartwood section near the center of the wood has larger (deeper) and more numerous lathe checks than the rotary veneer obtained from the sapwood section near the periphery, and these lathe checks provide passage for liquid.

Therefore, by laminating the rotary veneers so that the extending direction of the lathe checks and the direction of the wood fibers are roughly aligned, the water-soluble fireproofing chemical moves mainly through the cell lumen and open membrane pores in the sapwood section, where the lathe checks are relatively small and few, and through the relatively large and numerous lathe checks in the heartwood section, where the cell membrane pores are closed, the water-soluble noncombustible chemical agent moves through the relatively large number of lathe check. As a result, the difference in the amount of movement of fireproofing chemical in the lengthwise direction of the LVL between the heartwood section and the sapwood section could be reduced.

The wood of the present invention has injection holes of circular cross-section extending from the LVL front and back surfaces toward the center in the thickness direction, and the injection holes can be formed easily and efficiently by drilling processing, etc. The above-mentioned injection holes penetrate the raw material veneers and the adhesive layer between the raw material veneers.

Each of the injection holes on the front and back surfaces is arranged in plural numbers at intervals in a width direction and a lengthwise direction of the LVL. Among the above-mentioned injection holes, injection holes from the front surface and injection holes from the back surface are located at different positions in the width direction and the lengthwise direction.

All the raw material veneers are provided with the injection hole formed by at least any one of the injection holes from the front surface and the injection hole from the back surface.

Noncombustible chemical agent such as water-soluble is injected under reduced pressure or under pressure into the wood in which the above-mentioned injection holes are formed.

According to this procedure, the chemical agent is injected into the front and back surfaces of the wood at a depth of approximately 5 mm via the lathe checks inclined from the flat grain surface. In addition, the chemical agent also enters the center portion of the wood through the injection holes and is injected throughout the wood by good fluid movement, mainly through the lathe checks in the heartwood section and mainly through the cell lumen and open cell membrane pores in the sapwood section.

Next, the movement of the fireproofing chemical in the width direction of the wood (LVL for structure) is examined. The chemical aqueous solution hardly moves across the cell walls of wood (in other words, across the fiber direction). On the other hand, it is known that the fiber direction of a tree extends in an approximately vertical direction, but in order to maintain its strength, the fibers do not extend vertically, but rather spiral upward like a tornado at an inclination of about one-tenth of its lengthwise direction. Therefore, in the sapwood section, about one-tenth of the injected chemical agent moves in the direction perpendicular to the fiber accordingly, in the process of infiltrating from the cut surface of the fiber and moving along the fiber direction to the back of the lengthwise direction. Also, in the heartwood section, since the lathe checks also occur along the fiber direction, about one-tenth of the injected chemical agent moves in the direction perpendicular to the fiber, in the process of filtrating the chemical agent deeper in the length direction along the lathe checks as the path. As a result, even though the chemical aqueous solution hardly moves across the cell walls of the wood (in other words, across the fiber direction), it is possible to distribute the fireproofing chemical to the extent that the desired fireproofing ability is exhibited by forming injection holes at predetermined intervals, without forming injection holes all along the direction perpendicular to the fiber. The interval W1 between injection holes in the direction perpendicular to the fiber can be set to 25mm to 60mm. Also, the ratio of the interval L1 between injection holes in the fiber direction to the interval W1 between injection holes in the direction perpendicular to the fiber can be set to as 4:1 to 12:1, and preferably 7:1 to 10:1.

In the wood according to the present invention, since the injection holes from the back surface of the wood penetrate the raw material veneer and the adhesive layer between the raw material veneers, the raw material veneer around each injection hole from the surface forms an infiltration area in which the fireproofing chemical is infiltrated from each of the injection holes in the width direction and lengthwise direction.

Similarly, since the injection holes from the back surface of the wood penetrate the raw material veneer and the adhesive layer between the raw material veneers, the infiltration area is formed in all raw material veneers through which the injection holes penetrate.

The infiltration areas are arranged on the front surface side and the back surface side of the wood in the width direction and the lengthwise direction, respectively.

A three-dimensional infiltration area having a predetermined width, a predetermined length and a predetermined thickness is formed centering on each of the injection holes from the front surface and the injection holes from the back surface. It is preferable that each infiltration area be formed so as to overlap with each other so that no areas remains where the fireproofing chemical is not infiltrated between adjacent infiltration areas.

The injection holes from the front surface and the injection holes from the back surface can be implemented so that their tips overlap in the thickness direction. Accordingly, the infiltration areas on the front surface side and the back surface side are formed to overlap each other in the vertical direction so that no areas remains where the fireproofing chemical is not infiltrated between adjacent infiltration areas in the thickness direction.

As a result, in the wood according to the present invention, the fireproofing chemical is infiltrated in all areas, and fire resistance can be imparted to the entire wood.

The wood containing a fireproofing chemical can be implemented as LVL for structure (Laminated Veneer Lumber, i.e., "veneer laminate"), which is made by laminating raw material veneers obtained from either softwood or diffused-pore hardwood lumber through an adhesive agent and used primarily as load-bearing members for structures.

Each of the injection holes from the front surface and the injection holes from the back surface can be implemented as being arranged at equal intervals in both the lengthwise direction and the width direction of the LVL. It can be implemented as if the above-mentioned injection holes in each adjacent column in the lengthwise direction of the LVL are arranged in different positions in the width direction, and the above-mentioned injection holes in each adjacent row in the width direction of the LVL are arranged in different positions in the lengthwise direction.

For example, with regard to the injection holes from the front surface, by shifting the injection holes in adjacent each column and each row by half a pitch in the width direction and the lengthwise direction, these injection holes are arranged in a staggered manner as viewed from the front surface side. Also, with regard to the injection holes from the back surface, they are similarly arranged in a staggered manner as viewed from the back surface side. And the injection holes from the front surface and the injection holes from the back surface are, by shifting them by half a pitch in the width direction and the lengthwise direction, arranged in a grid-like pattern viewed from the front and back surfaces.

When the inventor of this application conducted preliminary tests on lumber of 12mm x 110mm x 1100mm, it was confirmed that bending Young's modulus decreased by 15% to 20% when the drilling interval in each section was 50mm, and bending Young's modulus decreased by 3% to 7% when the drilling interval was 200mm. From the above, it was confirmed that the longer the drilling interval, the smaller the decrease in bending Young's modulus, and although it depends on the species, the interval in the longitudinal direction is desirably 150mm to 200mm interval for veneer cedar LVL mixed with the heartwood section and the sapwood section and 100mm to 150mm interval for veneer poplar LVL mixed with the heartwood section and the sapwood section. According to the above, it is possible to provide lumber with uniform injection of fireproofing chemicals and suppression of the effect of decrease in ending Young's modulus due to cross-sectional defects.

### EFFECTS OF THE INVENTION

The present invention has improved the reliability of fire-resistance performance of LVL for structure containing a fireproofing chemical for wood materials for fire-resistant structure and has suppressed decrease in bending Young's modulus and decrease in strength. The present invention has succeeded in improving both the reliability of fire-resistance performance and the ease of procurement of raw materials with respect to LVL for structure containing a fireproofing chemical for wood materials for fire-resistant structure. The embodiment of the present invention can provide the following advantages.
·The processing cost can be lowered by reducing the number of production processes.
·The process can be implemented without sorting the used wood parts so that the yield is improved.
·Uniform injection of fireproofing chemicals and suppression of the effect of decrease in bending Young's modulus due to cross-sectional defects can be achieved.

### BRIEF DESCRIPTION OF THE DRAWINGS

[Fig.1] Fig.1(A) is an explanatory drawing of cross-sectional structure of logs for obtaining wood of LVL for structure according to the embodiment of the present invention, and Fig.1 (B) is an explanatory drawing of cross-sectional structure of logs for obtaining wood of LVL for structure according to another embodiment.
[Fig.2] Fig.2 shows the structure of LVL for structure according to the embodiment of the present invention, Fig.2(A) shows a plan view, Fig.2(B) shows a front view, Fig.2(C) shows a side view, and Fig.2(D) shows a bottom view.
[Fig.3] Fig.3 is an enlarged view of the main part of Fig.2(A) .
[Fig.4] Fig.4 is a longitudinal sectional view of the main part of the LVL for structure of the present invention.
[Fig.5] Fig.5(A) is a longitudinal sectional view of the main part showing the infiltration area of the LVL for structure of the present invention, and Fig.5(B) is a three-dimensional explanatory drawing showing the infiltration area of the LVL for structure of the present invention.
[Fig.6] Fig.6 is to explain the infiltration area of the LVL for structure of the present invention, Fig.6(A) is a three-dimensional explanatory drawing in which the infiltration area on the front surface side and the infiltration area on the back surface side are drawn separately, and Fig.6(B) is a three-dimensional explanatory drawing in which the infiltration area on the front surface side and the infiltration area on the back surface side are drawn superimposed.
[Fig.7] Fig.7 is an enlarged view of the main part of according to another embodiment.

### EMBODIMENT TO CARRY OUT THE INVENTION

Hereinafter, the embodiments of the present invention will be explained by referring to the drawings.

### (Overview)

The wood containing the fireproofing chemical for wood materials for fire-resistant structure in this embodiment is a LVL 61 for structure in which a plurality of sheets of raw material veneers 51 are laminated together via an adhesive layer.

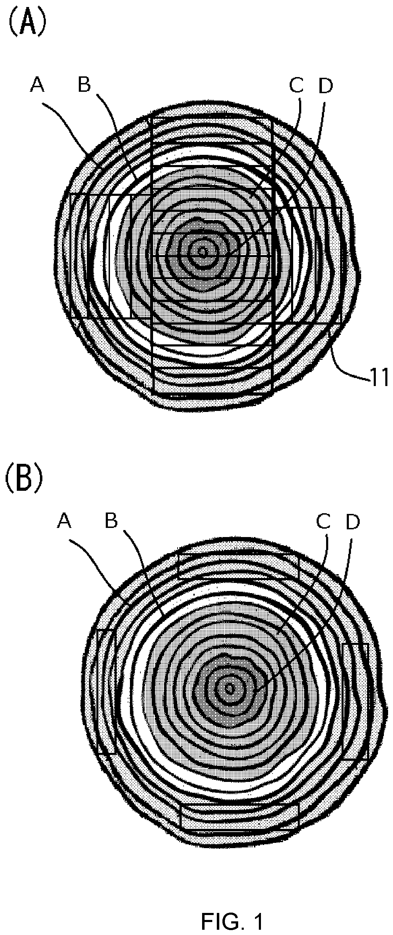

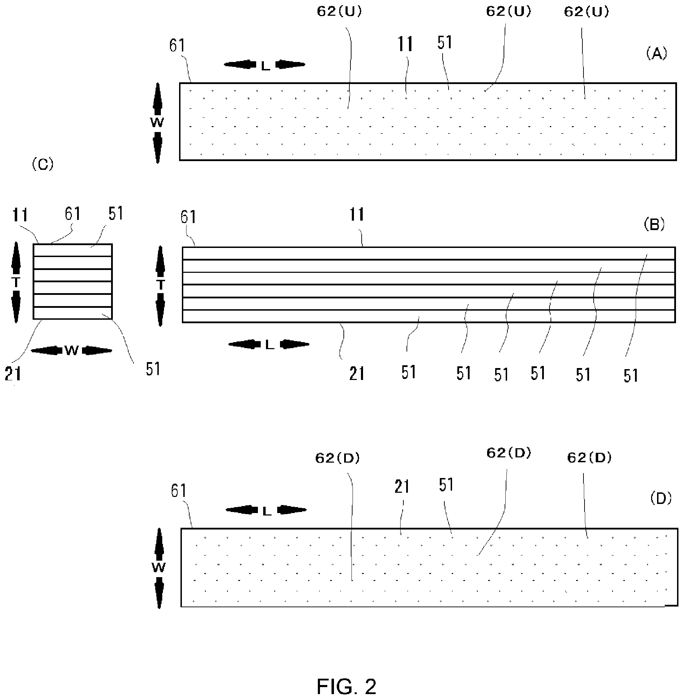

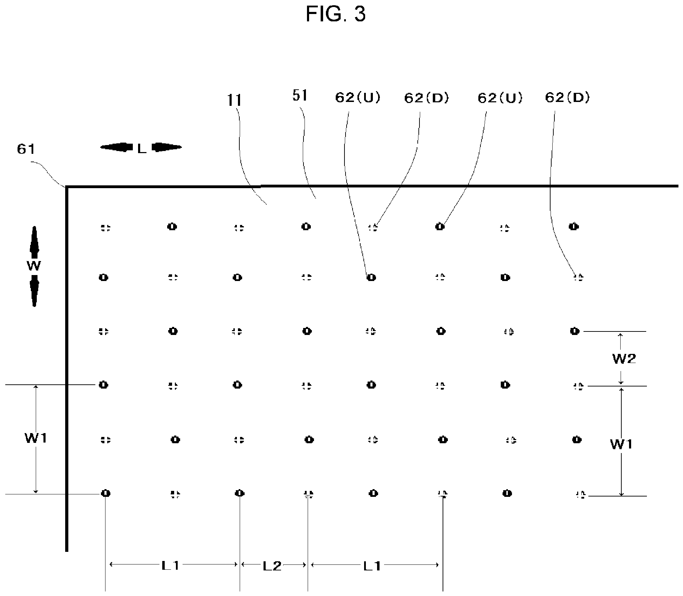

As shown in Fig.1(A), the raw material veneer 51 may be a material in which a sapwood section A, white line band B, heartwood aged section C and heartwood unaged section D of a coniferous tree such as Japanese cedar or diffused porous broad-leaved tree are mixed, or as shown in Fig.1(B), may be a material constituted only by a sapwood section A of a coniferous tree such as Japanese cedar or diffused porous broad-leaved tree. The raw material veneers 51 are all arranged so that their fibers extend along the longitudinal direction (arrow direction) of the LVL 61 for structure shown in Fig.2 and Fig.3.

### (Production of LVL 61 for structure)

In general, lumber is often broadly classified into a sapwood section and a heartwood section, it is said that the sapwood section is referred to be the whitish colored area around the periphery in the cross section of a log, while the heartwood section is referred to be the reddish colored area in the center in the cross section of a log, and more specifically, the heartwood section can be distinguished into two areas of the immature area and the mature area in the center, and there may also be a case where a white line band in the boundary region between the sapwood section and the heartwood section may exist. Accordingly, as shown in Fig.1, it can be divided into four areas from the outside: the sapwood section A, the white line band B, the heartwood aged section C and the heartwood unaged section D, and in the present invention, the terms the heartwood section simply refer to the area including the white line band B, heartwood aged section C and heartwood unaged section D.

In the present invention, as shown in Fig.1(A), not only the sapwood section A, which has good fluid movement, but also the heartwood section, which has relatively poor fluid movement may be used, or may be a mixture of them, or, as shown in Fig.1(B), only the sapwood section A may be used, where fluid movement of the liquid is well performed in the direction of fiber extending inside the wood.

### (Raw material veneer 51)

The raw material veneer 51 is obtained from these parts, and the LVL 61 for structure is produced by arranging the raw material veneer 51 with the direction of extending fiber (longitudinal direction of the standing timber) in the longitudinal direction and laminating.

The raw material veneer 51 is produced by cutting the standing timber as raw material into a predetermined thickness using a rotary lathe that allows for lathe checks. In this process, in Fig.1(B), it is necessary to distinguish only the sapwood section A from the remaining the white line band B, the heartwood aged section C and the heartwood unaged section D from the sapwood section A, but in Fig.1(A), it is not necessary to distinguish them so that it is advantageous in terms of collection of the material.

The raw material veneer 51 is processed into LVL 61 for structure of specified dimensions through processes such as cutting, drying, adhesion, lamination and cutting, the processes thereof can be conducted in the same manner as in the normal LVL producing process. Also, since LVL 61 for structure is generally thick and has a large cross section, adhesion and lamination may be repeated over multiple times. For example, when obtaining a LVL 61 for structure of 100mm thickness from raw material veneers having about 2 to 4 mm thickness (in some cases, 1mm or less), approximately 25 sheets to 100 sheets or more raw material veneers are laminated, but, instead of adhering and laminating the desired number of raw material veneers at one time, it may produce LVL 61 for structure having a thickness of 100mm by making a lamination thickness of 50mm in a first lamination and adhering them together in a second lamination.

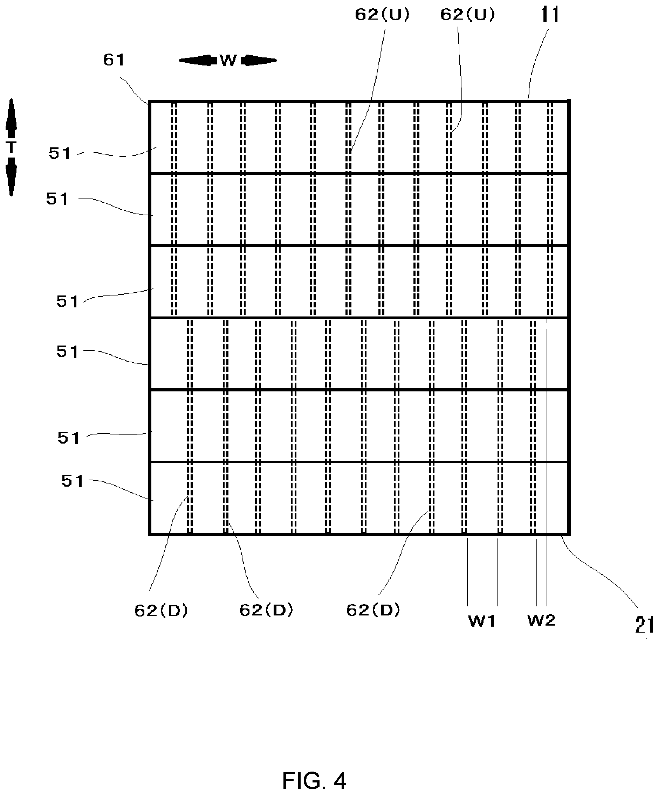

Since Fig.2 and Fig.4 are drawings for explaining the structure, the raw material veneer 51 is shown to be a larger thickness and several sheets less than they actually are, but as understood from the above explanation, in practice, a large number of thin raw material veneers 51 are laminated and implemented.

Alternatively, the LVL 61 for structure may be compacted laminates that are compressed in the thickness direction. This LVL 61 for structure is made of a plurality of raw material veneers 51 laminated in the thickness direction (T) and can be implemented with
width (W): 45mm to 900mm,
thickness (T): 30mm to 210mm,
length (L): 1,800mm to 9,000mm,
and the raw material veneers 51 and the adhesive between the raw material veneers 51 form at least one of the top and bottom injection holes 62.

### (With regard to injection hole 62)

In the LVL 61 for structure on which the raw material veneers 51 are laminated, many injection holes 62 are formed.

In the following explanation, the thickness direction of lamination of the raw material veneer 51 will be explained as (T), the width direction will be as (W) and the length direction will be as (L), respectively.

As shown in Fig.2(A), Fig.2(B) and Fig.3, many injection holes are formed by drilling process on the flat grain surfaces of front and back of the LVL 61 for structure (flat grain surface 11 on the front side and flat grain surface 21 on the back side).

Assuming that the chemical liquid such as fireproofing chemical 31 moves fluidly mainly in the fiber direction, injection holes 62 having substantially circular in cross section which extends across the fibers of the LVL 61 for structure, are formed with a drilling tool such as a drill. The diameter of the injection holes 62 can be drilled deeper when the size is larger, but the larger the hole, the lower the mechanical performance such as strength, bending Young's modulus so that it is determined by taking the drilling depth into consideration and, in general, it is preferably about 3mm to 15mm.

The injection holes 62 are holes having circular in cross section extending from the front and back plate flat grain surfaces toward the thickness (T) direction and can be implemented as holes having a depth of a half the plate thickness or more. The injection holes 62 (upper injection holes 62(U) from front surface and lower injection holes 62(D) from back surface) are arranged in a plurality of rows on the front and back flat grain surfaces (flat grain surface 11 at front side and flat grain surface 21 at back side) and are arranged in multiple in the width direction (W) in each row, respectively.

The upper injection holes 62(U) and lower injection holes 62(D) can be implemented, for example, when the cross-sectional dimension of the LVL is 150mm x 150mm, with a hole diameter of about 3mm to 15mm (preferably 5mm to 10mm) and a depth of 75mm. The depth of the injection holes 62 may be greater than 75mm in consideration of variations during processing.

In short, it is sufficient if all the raw material veneers 51 are reached by either one of the injection holes 62 of the upper injection holes 62(U) or lower injection holes 62(D), and the lengths of the upper injection holes 62(U) and lower injection holes 62(D) may be different.

### (Arrangement form of injection holes 62)

As shown in Fig.3, the injection holes 62 of the front and back (the upper injection holes 62(U) or lower injection holes 62(D)) are so formed that the interval in the fiber direction (lengthwise direction = L) in each row of, for example, L1 = 200mm to 300mm for LVL mixed with Japanese cedar sapwood section, and the interval between each row in the direction perpendicular to the fiber (width direction = W) W1 = 30mm to 60mm in the direction perpendicular to the fiber (width direction = W).

These intervals can be implemented by changing, and it is preferable to use that:
an interval L1 between injection holes in the fiber direction is 100mm to 300mm, and
an interval W1 between injection holes in the direction perpendicular to the fiber is 25mm to 60mm.

Incidentally, in this embodiment, in each row of injection holes 62 on the front and back surfaces adjacent to each other in the lengthwise direction L, the interval in the fiber direction (lengthwise direction = L) is shifted by half a pitch (in this example, W1/2 = 10 mm). Also, in each row of injection holes 62 on the front and back surfaces adjacent to each other in the width direction W, the interval in the fiber direction (lengthwise direction = L) is shifted by half a pitch (in this example, L1/2 = 100 mm). According to this, each of the injection holes 62 (upper injection hole 62(U) and lower injection hole 62(D)) of this LVL 61 for structure are arranged in a staggered manner on the front side and back side, respectively.

In addition, the arrangement of the upper injection holes 62(U) from the front surface and the lower injection holes 62(D) from the back surface is arranged in a grid pattern by shifting them by half a pitch in the lengthwise direction (L) and the width direction (W). That is, the upper injection hole 62(U) from the front surface and the lower injection hole 62(D) from the back surface are set to as L2 = 100mm in the fiber direction (interval in the lengthwise direction (L)). The interval between each row in the direction perpendicular to the fiber (interval in the width direction (W)) is set to as W2 = 10mm.

The above interval between each row in the direction perpendicular to the fiber (width direction = W) is the distance between the centers of adjacent holes.

When chemical agents are injected into adhered wood materials such as LVL and a laminated lumber, the adhesive layer formed by solidifying the adhesive between the raw material veneers form a wall, whereby infiltration of the chemical aqueous solution is prevented. Therefore, infiltration of the aqueous solution in the direction of the flat grain (W) perpendicular to the fiber is possible, but in the lamination direction, infiltration beyond the thickness of the veneer becomes difficult because the wall of solidified adhesive prevents infiltration. Thus, in order to achieve levelling of chemical agent infiltration into the LVL, it is necessary to infiltrate in the fiber direction by injecting through the injection holes formed in the lamination direction penetrating through the veneer and adhesive layer from the flat grain surface.

It is appropriate to determine the interval between the injection holes 62 with sufficient margin for infiltration in a preliminary test of staining solution injection, taking into consideration the item of wood material, the difference between the sapwood section and the heartwood section, the type of tree, and the regional differences where the tree has grown, etc.

It is advantageous in that the drilling process can easily form the injection holes 62 having a substantially circular cross section, and that the injection holes 62 having a substantially circular cross section can distribute the external load more uniformly than openings having polygonal in a cross section.

### (Other arrangement forms)

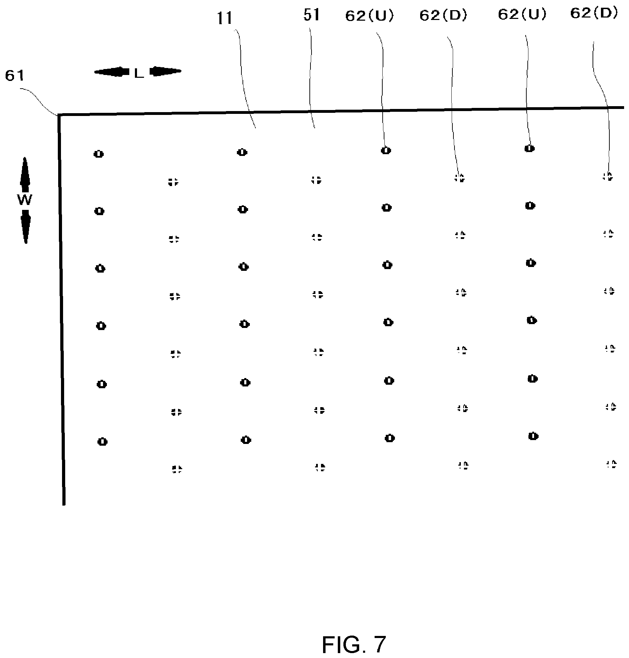

Incidentally, as shown in Fig.7, an arrangement form of the upper injection holes from the front surface is made a grid pattern, an arrangement form of the lower injection holes from the back side is made a grid pattern, and the arrangement of the injection holes on the front and back is formed by shifting sides by half a pitch to make a staggered manner as a whole. However, in this case, when focusing on each of the front side and the back side, the positions of injection holes in each row and each column coincide in the width direction and the lengthwise direction, so that the arrangement form shown in Fig.3 is more advantageous from the viewpoint of suppressing lowering in mechanical performance.

### (Injection of chemical agent)

The injection processing of the chemical agent is a step of injecting a fireproofing chemical into the LVL 61 for structure. Specifically, wood is completed by injecting an aqueous solution such as noncombustible, semi-incombustible or flame-retardant agents to the LVL 61 for structure using a decompression-pressurization injection can.

The injection amount of the chemical agent may be set according to the thickness of the raw material veneer 51 of the LVL 61 for structure, the type of tree and the regional differences in growth, and in the standard for Japanese cedar, it is appropriate to set about 150kg/m³ for the LVL 61 for structure with thickness of 150mm.

Unlike lumber and laminated wood, there are no major differences in veneer laminates, but since the state of impregnation of the chemical liquid varies depending on the species and growth conditions, it is preferable to conduct and implement preliminary experiments using water-soluble colorants to confirm the depressurization conditions and time, pressurization conditions and time, and the number of repetitions.

Also, as for the injection amount for process control it is preferable to measure weights before and after injection and manage the differences as the average injection amount of the lot.

The fireproofing chemical 31 that enters the injection hole 62 through the openings provided on the front and back flat grain surfaces moves fluidly in the fiber direction, thereby infiltrating the fireproofing chemical 31 into the center portion of the thickness of the LVL 61 for structure.

When the wood is composed only of the heartwood section, as previously mentioned, fluid movement through the cells is hardly executed since the cell membrane of fine pores are closed in softwoods and fillers such as tylose is filled in hardwoods, however since the lathe checks of rotary veneers generate relatively large and numerous, the chemical agent infiltrates through the lathe checks of the rotary veneers as a passage, so that it is confirmed by the research by the inventor of the present application that when injection holes 62 are provided at intervals of 100mm to 300mm in the longitudinal direction, the fireproofing chemical 31 can infiltrate almost uniformly.

On the other hand, when the wood is composed only of the sapwood section, the lathe checks of the rotary veneer are relatively small and occur less frequently, since the cell membrane of fine pores are opened in softwoods and fillers such as tylose is not filled in hardwoods, fluid movement through the membrane pores and cell lumen easily occurs. Therefore, the chemical agent infiltrate through the membrane pores and cell lumen as a passage, so that it is confirmed by the research by the inventor of the present application that when the injection holes 2 are provided at the above-mentioned intervals, the fireproofing chemical 31 can infiltrate almost uniformly.

Therefore, by aligning the longitudinal direction of all the raw material veneers 51 constituting the LVL 61 for structure substantially with the fiber direction and the lengthwise direction of the lathe checks, regardless of whether the wood is composed only of the sapwood section, the wood is composed only of the heartwood section, or the wood is composed of mixture of the heartwood section and the sapwood section, when the injection holes 62 are provided at intervals of 100mm to 300mm in the longitudinal direction, the fireproofing chemical 31 can be almost uniformly infiltrated.

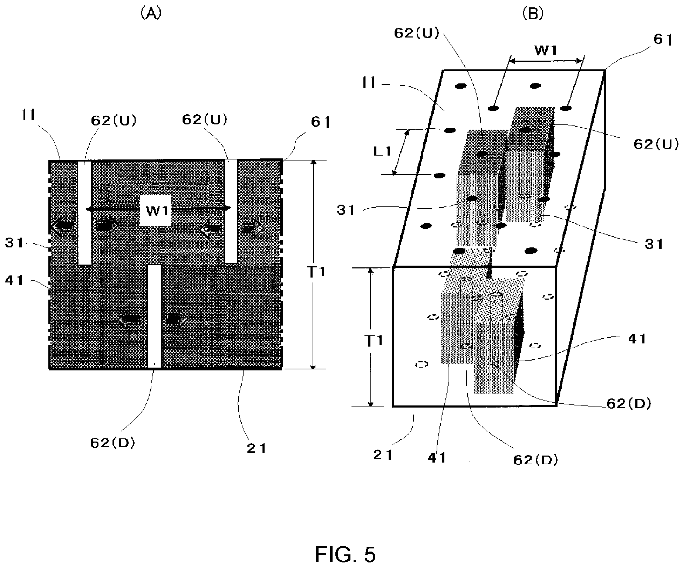

As shown in Fig.4, it is appropriate to set the depth of the inside of the injection holes 62 of the LVL 61 for structure so as not to be spaced in the left-right width direction, preferably to be a half or more of the length in the width direction to the extent that parts thereof overlap. Further, as shown in Fig.3 and Fig.5, in a plane view of the LVL 61 for structure, it is preferable to provide the injection holes 62 in a staggered pattern alternating left and right in a position where they do not overlap each other on each of the front surface side and the back surface side, in the point of maintaining the strength of the finished wood.

More preferably, as shown in Fig.3, those injection holes 62 are alternately provided left and right in a staggered pattern on each of the front surface side and the back surface side as well.

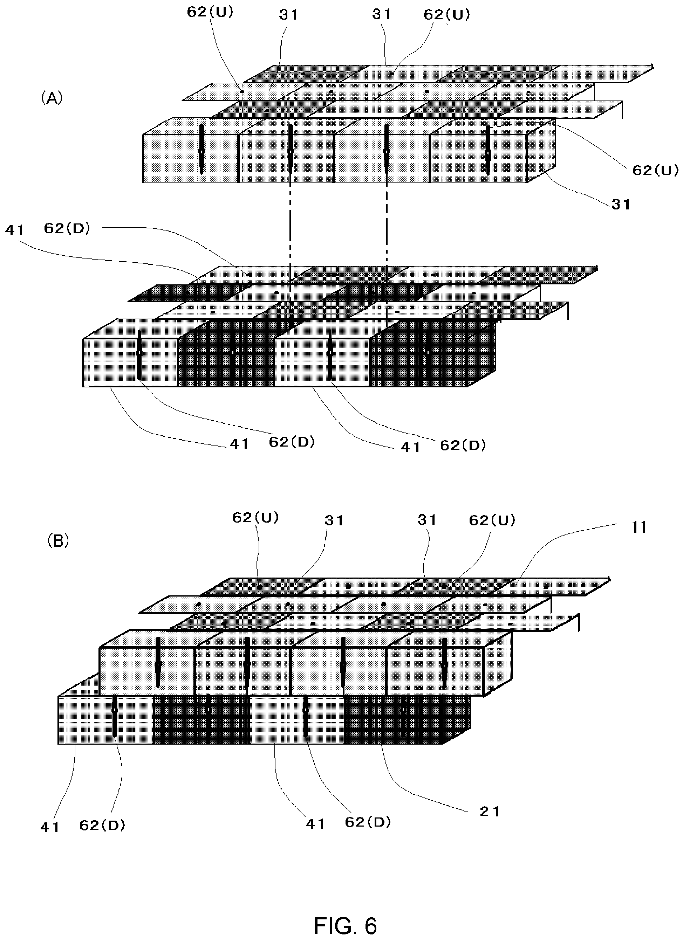

As shown in Fig.5 and Fig.6, by introducing and infiltrating the fireproofing chemical 31 to the LVL 61 for structure through the upper injection holes 62(U) on the surface of the LVL 61 for structure, infiltration areas 31 on the front surface side in which fireproofing chemical is infiltrated in the width direction and lengthwise direction from each of the injection holes are formed on each of laminated veneer around the upper injection hole 62(U).

The infiltration areas 31 on the front surface side are arranged on the front surface side of the wood in the width direction and the lengthwise direction and overlap each other such that no areas remain between adjacent infiltration areas 31 that are not infiltrated with the fireproofing chemical.

Similarly, on each of the veneers around the lower injection hole 62(D) from the back surface, infiltration areas 41 on the back surface side in which the fireproofing chemical is infiltrated in the width direction and the lengthwise direction from each of the lower injection holes 62(D) are formed.

The infiltration areas 41 on the back surface side are arranged on the back surface side of the wood in the width direction and the lengthwise direction and overlap each other such that no areas remain between adjacent infiltration areas 41 that are not infiltrated with the fireproofing chemical.

The infiltration area 31 on the front surface and the infiltration area 41 on the back surface side are arranged overlapping each other such that no areas remain between the infiltration areas in the thickness direction that are not infiltrated with the fireproofing chemical.

According to this, the entire area of the wood becomes infiltration areas with the fireproofing chemical.

### (Steps after injection)

Curing: It is preferable to carry out curing for leveling the injected chemical agents inside the wood, and the curing period is determined by preliminary experiments. Drying: in order to meet the quality of the product as determined by agreement with the customer, moisture content is controlled. From viewpoint of improvement of quality, it is preferable to carry out artificial drying.

Finish processing: In order to satisfy the prescribed requirements of a product, the product is subjected to finish processing such as rip-sawing or band-sawing for the width of the board, cross-cut-sawing for the length, and a sander or planer for the surface.

Inspection: In order to satisfy the quality of a product, necessary inspection is carried out. For example, the thickness and the width are measured with a caliper or a tape measure made of steel, the length is measured with a tape measure made of steel, and appearance and surface quality are checked visually and by touch.

Packing: The products are subjected to necessary packing such as covering on six sides to keep out moisture from outside air or covering with kraft paper and fixing with tape to prevent damage from the cargo.

The wood according to this embodiment can exhibit substantially uniform and good fire-resistance performance as a fire-resistant modified wood material as a whole. When wood material in which chemical agent is insufficiently injected in a part of areas is heated, flammable gases are generated from the wood tissue of the insufficiently injected areas by reaching a high temperature range of around 200°C or higher, and the said gases ignite. As a result, although the fire-resistance performance thereof is greatly impaired, the wood of the present invention is impregnated substantially entire areas with a sufficient amount of fire-resistant agent, so that flammable gas generation from the wood tissue is suppressed and the carbonized layer of chemical agent on the wood surface blocks the air, thereby achieving a stable fire-resistance performance.

### EXAMPLES

Hereinafter, Examples will be shown in order to enhance the understanding of the invention, but the present invention should not be understood as restricted to this Examples.

### Example 1

Species of raw material veneer: cypress
Thickness of raw material veneer: 3mm
The raw material veneers were laminated through a water-soluble adhesive to prepare LVL for structure having the following dimensions. The number of samples was made 30 (Examples 1-1 to 1-30).

Width of LVL for structure: 90mm
Thickness of LVL for structure: 45mm
Length of LVL for structure: 1,200mm

Injection holes were formed in the form shown in Fig.3 on the obtained "before processing" LVL for structure from the flat grain surface of the front side and the flat grain surface of the back side, respectively, according to the following conditions in order to obtain "after processing" LVL for structure.
w1: 60mm
L1: 200mm
Length (depth) in thickness direction: 25mm
Diameter: 5mm

### Example 2

Species of raw material veneer: Poplar
Thickness of raw material veneer: 2mm
The raw material veneers were laminated through a water-soluble adhesive to prepare LVL for structure with the following dimensions. The number of samples was made 30 (Examples 2-1 to 2-30) .

Width of LVL for structure: 110mm
Thickness of LVL for structure: 40mm
Length of LVL for structure: 1,200mm

Injection holes were formed in the form shown in Fig.3 on the obtained "before processing" LVL for structure from the flat grain surface of the front side and the flat grain surface of the back side, respectively, according to the following conditions in order to obtain "after processing" LVL for structure.
W1: 60mm
L1: 200mm
Length (depth) in thickness direction: 20mm
Diameter: 5mm

The following bending tests were carried out on LVL for structure "before processing" and LVL for structure "after processing" of Example 1 and Example 2, and the obtained bending Young's modulus is shown in Table 1. The tests were conducted in accordance with the test method of the Japanese Agricultural Standard JAS 0701-1 Bending Test 4.9, using the following method.

### Bending Test

In the test, the upper limit of load and the lower limit of load, the corresponding deflection, and the maximum load were measured in the proportional range under the relevant temperature and humidity conditions, and the bending Young's modulus was calculated based on the measurement results.

For each of Example 1 (1-1 to 1-30) and Example 2 (2-1 to 2-30), the bending Young's modulus "before processing", the bending Young's modulus "after processing", and the ratio of both are shown in Table 1. In Table 2, the maximum value (max), minimum value (min), average value (ave), standard deviation (σ), and lower limit standard (ave-3σ) of the number of 30 samples, and the ratio of the average value of "before processing" to the average value of "after processing" are shown.

**[Table 1]**

| Example 1 | | | | Example 2 | | | |
|---|---|---|---|---|---|---|---|
| Example | 1/ Before processing | 2/ After processing | 2/ 1 | Example | 1/ Before processing | 2/ After processing | 2/1 |
| 1-1 | 11.46 | 10.78 | 0.94 | 2-1 | 11.16 | 10.72 | 0.96 |
| 1-2 | 11.47 | 10.84 | 0.95 | 2-2 | 11.15 | 11.06 | 0.99 |
| 1-3 | 11.41 | 10.87 | 0.95 | 2-3 | 12.23 | 11.85 | 0.97 |
| 1-4 | 11.81 | 11.31 | 0.96 | 2-4 | 12.09 | 11.84 | 0.98 |
| 1-5 | 11.22 | 10.85 | 0.97 | 2-5 | 12.16 | 11.76 | 0.97 |
| 1-6 | 11.85 | 11.31 | 0.95 | 2-6 | 12.12 | 11.79 | 0.97 |
| 1-7 | 10.9 | 10.55 | 0.97 | 2-7 | 11.42 | 10.99 | 0.96 |
| 1-8 | 11.48 | 10.89 | 0.95 | 2-8 | 11.93 | 11.27 | 0.94 |
| 1-9 | 11.39 | 10.90 | 0.96 | 2-9 | 11.87 | 11.43 | 0.96 |
| 1-10 | 11.48 | 10.91 | 0.95 | 2-10 | 11.67 | 11.27 | 0.97 |
| 1-11 | 12.02 | 11.39 | 0.95 | 2-11 | 12.07 | 11.5 | 0.95 |
| 1-12 | 11.14 | 10.62 | 0.95 | 2-12 | 11.98 | 11.44 | 0.95 |
| 1-13 | 11.68 | 11.15 | 0.95 | 2-13 | 11.2 | 10.66 | 0.95 |
| 1-14 | 12.06 | 11.39 | 0.94 | 2-14 | 11.39 | 11.03 | 0.97 |
| 1-15 | 11.15 | 10.77 | 0.97 | 2-15 | 11.74 | 11.38 | 0.97 |
| 1-16 | 11.46 | 10.94 | 0.95 | 2-16 | 11.53 | 11.15 | 0.97 |
| 1-17 | 11.46 | 11.04 | 0.96 | 2-17 | 11.31 | 10.84 | 0.96 |
| 1-18 | 11.63 | 11.14 | 0.96 | 2-18 | 11.42 | 11.19 | 0.98 |
| 1-19 | 11.48 | 11.17 | 0.97 | 2-19 | 10.90 | 10.61 | 0.97 |
| 1-20 | 11.64 | 10.93 | 0.94 | 2-20 | 10.77 | 10.41 | 0.97 |
| 1-21 | 11.01 | 10.58 | 0.96 | 2-21 | 11.29 | 10.95 | 0.97 |
| 1-22 | 11.93 | 11.14 | 0.93 | 2-22 | 10.68 | 10.34 | 0.97 |
| 1-23 | 11.83 | 11.17 | 0.94 | 2-23 | 10.73 | 10.34 | 0.96 |
| 1-24 | 11.36 | 10.88 | 0.96 | 2-24 | 12.74 | 12.18 | 0.96 |
| 1-25 | 11.88 | 11.06 | 0.93 | 2-25 | 12.7 | 12.42 | 0.98 |
| 1-26 | 11.48 | 10.68 | 0.93 | 2-26 | 12.26 | 11.97 | 0.98 |
| 1-27 | 11.19 | 10.33 | 0.92 | 2-27 | 12.19 | 11.93 | 0.98 |
| 1-28 | 11.48 | 11.1 | 0.97 | 2-28 | 11.93 | 11.91 | 1.00 |
| 1-29 | 11.59 | 10.86 | 0.94 | 2-29 | 11.57 | 11.08 | 0.96 |
| 1-30 | 11.74 | 10.52 | 0.90 | 2-30 | 11.85 | 11.87 | 1.00 |

**[Table 2]**

| Example 1 | | | Example 2 | | |
|---|---|---|---|---|---|
| | Before processing | After processing | | Before processing | After processing |
| max | 12.06 | 11.39 | max | 12.74 | 12.42 |
| min | 10.9 | 10.33 | min | 10.68 | 10.34 |
| ave | 1/11.52 | 2/ 10.94 | ave | 1/ 11.67 | 2/11.31 |
| σ | 0.28485 | 0.261466 | σ | 0.540075 | 0.553839 |
| ave-3σ | 10.67 | 10.15 | ave-3σ | 10.05 | 9.64 |
| 2/1 | 0.949 | | 2/1 | 0.969 | |

As is clear from the results in Table 1 and Table 2, the change in bending Young's modulus between "before processing" and "after processing" was limited to around 0.95, intending that the effect of the reduction in bending Young's modulus due to cross-sectional defects could be suppressed, and it was confirmed that appropriate quality control could be performed after setting the lower limit standard. In addition, as mentioned above, a fireproofing chemical injected from the injection holes 62 is uniformly present in this LVL for structure, so that it exhibits the prescribed noncombustible performance. Therefore, it was possible to provide a LVL for structure that achieves both uniform injection of the fireproofing chemical and suppression of the effect of the reduction in bending Young's modulus due to cross-sectional defects.

### EXPLANATION OF REFERENCE NUMERALS

- 11: Flat grain surface of front side
- 21: Flat grain surface of back side
- 31: Infiltration area on front surface side
- 41: Infiltration area on back surface side
- 51: Raw material veneer
- 61: LVL for structure
- 62: Injection hole
- 62(U): Upper injection hole
- 62(D): Lower injection hole
- A: Sapwood section
- B: White line band
- C: Heartwood aged section
- D: Heartwood unaged section

## Claims

1. Wood containing a fireproofing chemical which comprises
of wood injected with a fireproofing chemical inside,
the wood is structural LVL in which multiple layers of raw material veneers constituted by a section of only sapwood section, a section of only heartwood section or a mixed section of the sapwood section and the heartwood section are laminated in a front and back thickness direction via an adhesive layer,
the raw material veneer is a rotary veneer provided with lathe checks,
the longitudinal direction of the wood is substantially coincided with a fiber direction and a lengthwise direction of the lathe checks; and
the wood has injection holes with circular cross section extending in the thickness direction from each of the front and back surfaces of the LVL,
the injection holes penetrate a plurality of the raw material veneers and an adhesive layer between the raw material veneers,
each of the injection holes on the front and back surfaces is arranged in plural numbers at intervals in a width direction and a lengthwise direction of the LVL,
among the injection holes, injection holes from the front surface and injection holes from the back surface are arranged at different positions in the width direction and the lengthwise direction, and
all the raw material veneers are provided with the injection holes from at least one of the injection holes from the front surface and the injection holes from the back surface.

2. The wood containing a fireproofing chemical according to Claim 1, wherein
each of the injection holes from the front surface and the injection holes from the back surface are arranged at equal intervals in both the lengthwise direction and the width direction of the LVL,
each row of injection holes adjacent to each other in the lengthwise direction of the LVL are arranged at different positions in the width direction,
each row of the injection holes adjacent to each other in the width direction of the LVL are arranged at different positions in the lengthwise direction; and
the tips of the injection holes from the front surface and the injection holes from the back surface overlap in the thickness direction.

3. The wood containing a fireproofing chemical according to Claim 1 or 2, wherein
the raw material veneer around the injection holes from the surface has areas on surface-side infiltration where the fireproofing chemical has infiltrated from each of the injection holes in the width direction and lengthwise direction,
the infiltration areas on the surface side are arranged on the surface side of the wood in the width direction and lengthwise direction and overlap each other so that no areas remains where the fireproofing chemical is not infiltrated between adjacent infiltration areas,
the raw material veneer around the injection holes from the back side has infiltration areas on the back side where the fireproofing chemical has infiltrated from each of the injection holes in the width and lengthwise directions, and
the infiltration areas on the back side are arranged on the back side of the wood in the width direction and lengthwise direction and overlap each other so that no areas remains where the fireproofing chemical is not infiltrated between adjacent infiltration areas; and
the infiltration areas on the front surface side and the infiltration areas on the back side are configured so as to overlap each other so that no areas remains where the fireproofing chemical is not infiltrated between the infiltration areas in the thickness direction.

4. The wood containing a fireproofing chemical according to Claim 1 or 2, wherein the wood is made of
width (W): 45mm to 900mm,
thickness (T): 30mm to 210mm, and
length (L): 1,800mm to 9,000mm.

5. The wood containing a fireproofing chemical according to Claim 1 or 2, wherein the injection holes are:
diameter of injection holes is 3mm to 15mm,
interval L1 between the injection holes in the fiber direction is 100mm to 300mm,
interval W1 between the injection holes in the orthogonal direction to fiber is 25mm to 60mm, and
ratio of the interval L1 between the injection holes in the fiber direction to the interval W1 between injection holes in the orthogonal direction to fiber is 4:1 to 12:1.
